# EUROPEAN PATENT SPECIFICATION

(11) **EP 2 980 120 B1**
(45) Date of publication and mention of the grant of the patent: **30.08.2017**
(21) Application number: 14773193.9
(22) Date of filing: 14.03.2014
(51) Int. Cl.: C08G 69/44, B60C 1/00, C08G 69/40

(54) **TIRE**
REIFEN
PNEUMATIQUE

(30) Priority: 29.03.2013 JP 2013074648
(43) Date of publication of application: 03.02.2016
(73) Proprietor: Bridgestone Corporation, Tokyo 104-8340 (JP)
(72) Inventor: HONJO, Atsuko, Tokyo 104-8340 (JP); GAO, Tong, Tokyo 104-8340 (JP); FUDEMOTO, Hiroyuki, Tokyo 104-8340 (JP)
(74) Representative: Oxley, Robin John George
(86) International application number: PCT/JP2014/056996
(87) International publication number: WO 2014/156740

(56) References cited:
- EP-A1- 1 120 129
- EP-A1- 1 552 965
- EP-A1- 2 610 072
- JP-A- 2000 271 209
- JP-A- 2012 066 809
- US-A1- 2007 172 670

## Description

### Technical Field

The present invention relates to a tire that is to be fitted on a rim, and particularly, to a tire in which at least a portion thereof is formed of a resin material.

### Background Art

Conventionally, in vehicles such as passenger cars, pneumatic tires constructed from rubber, organic fiber materials, steel members, and the like have been used. General rubber materials conventionally used for pneumatic tires are not problematic with respect to, for example, heat resistance. However, multiple steps, for example, kneading, seating, molding, and vulcanization are usually performed in a tire manufacturing process, and productivity improvement has been demanded.

In order to meet the demand, in recent years, from the viewpoints of weight reduction, ease of molding, and ease in recycling, investigations have been conducted on the use of resin materials, particularly thermoplastic resins, thermoplastic elastomers and the like as the tire materials. For example, Japanese Patent publications such as Japanese Patent Application Laid-Open (JP-A) No.2003-104008 disclose pneumatic tires molded using thermoplastic polymer materials. These thermoplastic polymer materials (thermoplastic resins) have many advantages from the viewpoint of productivity improvement, such as injection-molding capability.

In addition, a tire is proposed which uses a polyamide-based thermoplastic elastomer as a thermoplastic polymer material (See JP-A No. 2012-46030).

### SUMMARY OF INVENTION

### Technical Problem

Tires using thermoplastic polymer materials can be easily produced at lower cost as compared with conventional tires formed from rubber. However, when a tire frame is formed from a uniform thermoplastic material and is not equipped with a reinforcing member such as a carcass ply, there is room for improvement from the viewpoints of pressure resistance, and the like, as compared with conventional tires formed from rubber

In particular, in conventional tires made of rubber, the tire shape under internal pressure is usually kept by using a carcass or a ply. On the other hand, in the tire made by using a polymer material (resin) as mentioned above, an embodiment is proposed in which a reinforcing member such as a carcass or a ply is not an indispensable component, and a steel cord is used to hoop the tire in the circumferential direction of the tire. Thus, since there may be cases in which the reinforcing member is not used in the side part of the tire formed by using a polymer material, the polymer material is required to ensure pressure resistance by itself.

In view of the circumstances described above, an object of the present invention is to provide a tire which is formed by using a resin material and has excellent pressure resistance.

### Solution to Problem

The present invention provides a tire which comprises: a circular tire frame formed of a resin material, wherein the resin material comprises a polyamide-based thermoplastic elastomer including a soft segment and a hard segment in a molecule thereof, the hard segment having a crystallinity of from 14% to 26%, the soft segment being formed of an ABA-type triblock polyether diamine.

### Effect of the Invention

According to the present invention, a tire which is formed of a resin material and has excellent pressure resistance can be provided.

### BRIEF DESCRIPTION OF THE DRAWINGS

FIG. 1A is a perspective view illustrating a cross-section of a part of a tire according to one embodiment of the invention.
FIG. 1B is a cross-sectional view illustrating a bead portion mounted on a rim.
FIG. 2 is a cross-sectional view taken along a tire rotation axis, which illustrates a state where a reinforcing cord is embedded in a crown portion of a tire case of the tire according to the embodiment
FIG. 3 is a diagram illustrating an operation of embedding the reinforcing cord in the crown portion of the tire case by the use of a cord heating apparatus and rollers.

### DESCRIPTION OF EMBODIMENTS

The tire of the invention has a circular tire frame that is formed of a resin material, in which the resin material includes a polyamide-based thermoplastic elastomer including a soft segment and a hard segment having a crystallinity of from 14% to 26% in a molecule thereof.

The tire of the invention has excellent pressure resistance against internal pressure because the tire frame in the invention is configured by including a polyamide-based thermoplastic elastomer comprising a polyamide-based thermoplastic elastomer including a soft segment and a hard segment having a crystallinity of from 14% to 26% in a molecule thereof. Further, the tire of the invention has excellent productivity because the tire frame can be made by injection-molding.

### «Resin Material»

As described above, the tire has a tire frame formed by using a resin material. The resin material includes at least a polyamide-based thermoplastic elastomer including a polyamide-based thermoplastic elastomer including a soft segment and a hard segment having a crystallinity of from 14% to 26% in a molecule thereof.

Although the resin material may include a thermoplastic elastomer other than the polyamide-based thermoplastic elastomer and an arbitrary component, the content of the polyamide-based thermoplastic elastomer including a soft segment and a hard segment having a crystallinity of from 14% to 26% in a molecule thereof is preferably 30 mass% or more, more preferably 50 mass% or more, and particularly preferably 70 mass% or more. The term "resin" in the present specification is a concept which includes thermoplastic resins and thermohardening resins, but does not include natural rubber.

### (Polyamide-based Thermoplastic Elastomer)

In the invention, the "polyamide-based thermoplastic elastomer" means a thermoplastic resin material which is formed of a copolymer including a polymer constituting a hard segment that is crystalline and has a high melting point, and a polymer constituting a soft segment that is non-crystalline and has a low glass transition temperature, and which has an amide bond (-CONH-) in the main chain of the polymer constituting the hard segment.

The polyamide-based thermoplastic elastomer may be referred to simply as "TPA" (Thermo Plastic Amid elastomer).

The polyamide-based thermoplastic elastomer may be a material in which at least a polyamide constitutes a crystalline hard segment having a high melting point and another polymer (for example, a polyester or a polyether) constitutes a non-crystalline soft material having a low glass transition temperature. Further, in the polyamide-based thermoplastic elastomer, a chain extending agent such as a dicarboxylic acid may be used in addition to the hard segment and the soft segment. Examples of the polyamide for forming the hard segment include a polyamide produced using a monomer represented by the following Formula (1) or (2).

### - Hard Segment -

In the invention, the hard segment has a crystallinity of from 14% to 26%.

The crystallinity of the hard segment affects properties, such as elasticity and stiffness, of the resin material from which a tire is made, and when the crystallinity of the hard segment is less than14%, the resin material is too low in stiffness for pressure resistance for the tire. When the crystallinity of the hard segment exceeds 26%, the resin material is too high in stiffness, and it is difficult to fit the tire on a rim for instance.

The crystallinity of the hard segment of the polyamide-based thermoplastic elastomer is preferably from 15% to 26%, and more preferably from 17% to 26%.

In the invention, the crystallinity of the hard segment of the polyamide-based thermoplastic elastomer is a value measured by a differential scanning calorimeter (DSC) [DSC Q2000, TA Instruments Japan Inc.] in the manner described below.

The melting heat quantity of the crystalline part of the hard segment is measured by heating the polyamide-based thermoplastic elastomer from 0°C to 200°C at a rate of 10°C/minute to calculate the crystallinity. At this time, the melting heat quantity is obtained on the basis of a base-line drawn from a melt onset temperature to a melt completion temperature.

The crystallinity of the hard segment of the polyamide-based thermoplastic elastomer can be controlled by the composition of polyamide which forms the hard segment, synthesis conditions of the polyamide-based thermoplastic elastomer (in particular, a temperature condition), conditions of molding, such as injection-molding, or extrusion molding during tire making, tire heating conditions after tire making, and other conditions.

First, a molecule structure of a polyamide which forms the hard segment will be described.

Examples of polyamides which form the hard segment may include a polyamide synthesized by using a monomer represented by the following Formula (1) or the following Formula (2).

Formula (1) H₂N-R¹-COOH

In Formula (1), R¹ represents a hydrocarbon molecular chain having 2 to 20 carbon atoms, or an alkylene group having 2 to 20 carbon atoms.

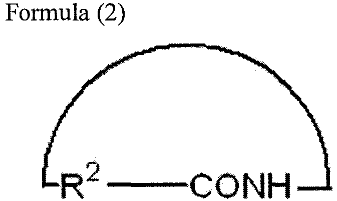

In Formula (2), R² represents a hydrocarbon molecular chain having 3 to 20 carbon atoms, or an alkylene group having 3 to 20 carbon atoms.

In Formula (1), R¹ is preferably a hydrocarbon molecular chain having 3 to 18 carbon atoms or an alkylene group having 3 to 18 carbon atoms, more preferably a hydrocarbon molecular chain having 4 to 15 carbon atoms or an alkylene group having 4 to 15 carbon atoms, and particularly preferably a hydrocarbon molecular chain having 10 to 15 carbon atoms or an alkylene group having 10 to 15 carbon atoms. Furthre, in Formula (2), R² is preferably a hydrocarbon molecular chain having 3 to 18 carbon atoms or an alkylene group having 3 to 18 carbon atoms, more preferably a hydrocarbon molecular chain having 4 to 15 carbon atoms or an alkylene group having 4 to 15 carbon atoms, and particularly preferably a hydrocarbon molecular chain having 10 to 15 carbon atoms or an alkylene group having 10 to 15 carbon atoms.

Examples of the monomer represented by Formula (1) or Formula (2) include an ω-aminocarboxylic acid and a lactam. Further, examples of the polyamide that forms the hard segment include a polycondensate of a ω-aminocarboxylic acid or a lactam, and a copolycondensate of a diamine and a dicarboxylic acid.

Examples of the ω-aminocarboxylic acids include aliphatic ω-aminocarboxylic acids having 5 to 20 carbon atoms, such as 6-aminocaproic acid, 7-aminoheptanoic acid, 8-aminooctanoic acid, 10-aminocapric acid, 11-aminoundecanoic acid, and 12-aminododecanoic acid. Examples of the lactam include aliphatic lactams having 5 to 20 carbon atoms, such as lauryl lactam, ε-caprolactam, undecanlactam, ω-enatholactam, and 2-pyrrolidone.

Examples of the diamines may include diamine compounds, for example, aliphatic diamines having 2 to 20 carbon atoms, such as ethylenediamine, trimethylenediamine, tetramethylenediamine, hexamethylenediamine, heptamethylenediamine, octamethylenediamine, nonamethylenediamine, decamethylenediamine, undecamethylenediamine, dodecamethylenediamine, 2,2,4-trimethylhexamethylenediamine, 2,4,4-trimethylhexamethylenediamine, 3-methylpentamethylenediamine, and meta- xylene diamine. Further, the dicarboxylic acid may be represented by HOOC-(R³)m-COOH(R³: a hydrocarbon molecular chain having 3 to 20 carbon atoms, m: 0 or 1), and examples thereof include aliphatic dicarboxylic acids having 2 to 22 carbon atoms, such as oxalic acid, succinic acid, glutaric acid, adipic acid, pimelic acid, suberic acid, azelaic acid, sebacic acid, and dodecanedioic acid.

Examples of the polyamide which forms the hard segment include a polyamide obtained by ring-opening polycondensation of ε-caprolactam (polyamide 6), a polyamide obtained by ring-opening polycondensation of undecanlactam (polyamide 11), a polyamide obtained by ring-opening polycondensation of lauryl lactam (polyamide 12), a polyamide obtained by polycondensation of 12-aminododecanoic acid (polyamide 12), a polyamide obtained by polycondensation of diamine with dibasic acid (polyamide 66), or a polyamide including meta-xylene diamine as a constituent unit (amide MX).

The polyamide 6 can be represented by, for example, {CO-(CH₂)₅-NH}ₙ (n is an arbitrary number of the repeating unit), and n is, for example, preferably from 2 to 100, and more preferably from 3 to 50.

The polyamide 11 can be represented by, for example, {CO-(CH₂)₁₀-NH}ₙ (n is an arbitrary number of the repeating unit), and n is, for example, preferably from 2 to 100, and more preferably from 3 to 50.

The polyamide 12 can be represented by, for example, {CO-(CH₂)₁₁-NH}ₙ (n is an arbitrary number of the repeating unit), and n is, for example, preferably from 2 to 100, and more preferably from 3 to 50.

The polyamide 66 can be represented by, for example, {CO(CH₂)₄CONH(CH₂)₆NH}ₙ (n is an arbitrary number of the repeating unit), and n is, for example, preferably from 2 to 100, and more preferably 3 to 50.

The amide MX including meta-xylene diamine as a constituent unit may be represented by the following constituent unit (A-1), [in (A-1), n is an arbitrary number of the repeating unit], and n is, for example, preferably from 2 to 100, and more preferably form 3 to 50.

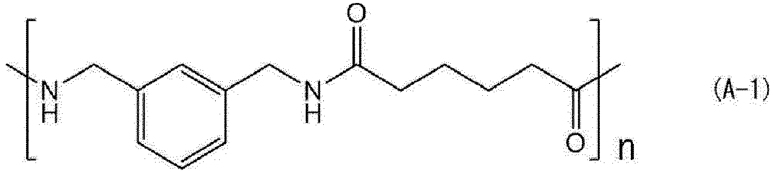

The polyamide-based thermoplastic elastomer has preferably a polyamide including a unit structure represented by -[CO-(CH₂)₁₁-NH]- (polyamide 12) as a hard segment. As described above, the polyamide 12 may be obtained by a ring-opening polycondensation of lauryl lactam or the polycondensation of 12-aminododecanoic acid.

### - Soft Segment -

ABA-type triblock polyether diamine is used to form the soft segment. A polymer that forms the soft segment may also include, for example, a polyester or other polyether. Examples of the other polyether include, for example, polyethylene glycol, polypropylene glycol, polytetramethylene ether glycol (PTMG), an ABA-type triblock polyether diol. These may be used singly or in combination of two or more kinds thereof. A polyether diamine obtained by allowing terminals of a polyether with ammonia or the like, for example, may also be used.

Here, the "ABA-type triblock polyether diol" includes a polyether represented by the following Formula (3).

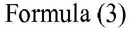

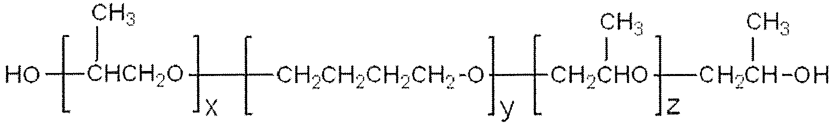

In Formula (3), x and z each independently represents an integer of 1 to 20. y represents an integer of 4 to 50.

In Formula (3), x and z are each preferably an integer of 1 to 18, more preferably an integer of 1 to 16, particularly preferably an integer of 1 to 14, and most preferably an integer of 1 to 12. Further, in Formula (3), y is preferably an integer of 5 to 45, more preferably an integer of 6 to 40, particularly preferably an integer of 7 to 35, and most preferably an integer of 8 to 30.

Further, the "ABA-type triblock polyether diamine" includes a polyether diamine represented by the following Formula (N).

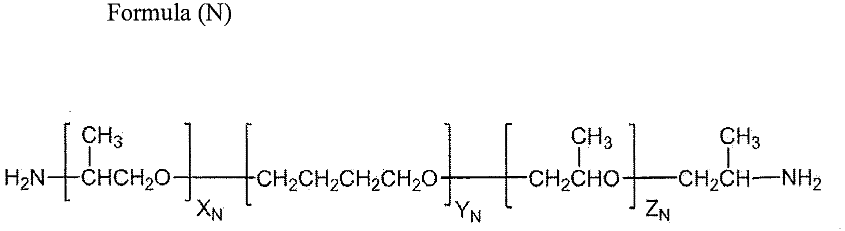

In Formula (N), X_{N} and Z_{N} each independently represent an integer of 1 to 20. Y_{N} represents an integer of 4 to 50.

In Formula (N), X_{N} and Z_{N} preferably are an integer of from 1 to 18, respectively, more preferably from 1 to 16, particularly preferably from 1 to 14, and most preferably from 1 to 12. In Formula (N), Y_{N} is preferably an integer of 5 to 45, more preferably from 6 to 40, particularly from 7 to 35, and most preferably 8 to 30.

The soft segment is preferably a polymer including a constituent unit derived from tetramethylene ether glycol (TMG), and in particular, from a viewpoint of improvement of pressure resistance of a tire, preferably a copolymer including a constituent unit derived from tetramethylene ether glycol (TMG). Other constituent units which may form a copolymer with the constituent unit derived from tetramethylene ether glycol (TMG) are not especially limited and include a constituent unit derived from the above described ethylene glycol (EG), propyleneglycol (PG), and the like.

Specifically, examples of the copolymer containing the constituent unit derived from tetramethylene ether glycol (TMG) include a copolymer which includes, for example, a constituent unit derived from TMG and a constituent unit derived from PPG, such as a binary copolymer (for example, PTMG/PPG) and a terpolymer (for example, PPG/PTMG/PPG, PTMG/PPG/PEG).

Examples of the combination of the hard segment and the soft segment include any combination of any of the hard segments described above and any of the soft segments described above.

Among these, a combination of a ring-opening polycondensate of lauryl lactam with polyethylene glycol, a combination of a ring-opening polycondensate of of lauryl lactam with polypropylene glycol, a combination of a ring-opening polycondensate of lauryl lactam with poly tetramethylene ether glycol, a combination of a ring-opening polycondensate of lauryl lactam with an ABA-type triblock polyether, a combination of a ring-opening polycondensate of lauryl lactam with an ABA-type triblock polyether diamine, a combination of a polycondensate of aminododecanoic acid with polyethylene glycol, a combination of a polycondensate of aminododecanoic acid with polypropylene glycol, a combination of a polycondensate of aminododecanoic acid with poly tetramethylene ether glycol, a combination of a polycondensate of aminododecanoic acid wiht an ABA-type triblock polyether, and a combination of a polycondensate of aminododecanoic acid with an ABA-type triblock polyether diamine are preferable. Further, a combination of a ring-opening polycondensate of lauryl lactam with an ABA-type triblock polyether, a combination of a ring-opening polycondensate of lauryl lactam with an ABA-type triblock polyether diamine, a combination of a polycondensate of aminododecanoic acid with an ABA-type triblock polyether, and a combination of a polycondensate of aminododecanoic acid with ABA-type triblock polyether diamine are particularly preferable.

The polymer which forms the soft segment may include, as a monomer unit, a diamine such as a branched saturated diamine having 6 to 22 carbon atoms, a branched alicyclic diamine having 6 to 16 carbon atoms, or a norbornandiamine. Further, the branched saturated diamine having 6 to 22 carbon atoms, the branched alicyclic diamine having 6 to 16 carbon atoms or norbornanamine may be used singly, or in combination with each other, or in combination with the ABA-type triblock polyether or the ABA-type triblock polyether diamine described above.

Examples of the branched saturated diamine having 6 to 22 carbon atoms include, for example, 2,2,4-trimethyl-1,6-hexanediamine, 2,4,4-trimethyl-1,6-hexanediamine, hexanediamine, 1,2-diaminopropane, 1,3-diaminopentane, 2-methyl-1,5-diaminopentane, and 2-methyl-1,8-diaminooctane.

Examples of the branched alicyclic diamine having 6 to 16 carbon atoms include, for example,5-amino- 2,2,4-trimethyl-1-cyclopentane-methylamine, 5-amino-1,3,3-trimethylcyclohexanemethylamine. These diamines may be either of cis- or trans-isomers, or any mixture thereof.

Examples of the norbornandiamine include, for example, 2,5-norbornane dimethylamine, 2,6-norbornane dimethylamine, or any mixture thereof.

Further, the polymer which forms the soft segment may include, as a monomer unit, other diamine compound other than the above descrived compounds. Examples of the other diamine compound include, for example, an aliphatic diamine such as ethylenediamine, trimethylenediamine, tetramethylenediamine, hexamethylenediamine, heptamethylenediamine, octamethylenediamine, nonamethylenediamine, decamethylenediamine, undecamethylenediamine, dodecamethylenediamine, 2,2,4-trimethylhexamethylenediamine, 2,4,4-trimethylhexamethylenediamine, or 3-methylpentane methylenediamine, an alicylic diamine such as bis(4-aminocyclohexyl) methane, bis(4-aminocyclohexyl)propane, 1,3- bis(aminomethyl)cyclohexane, or 1,4- bis(aminomethyl)cyclohexane, and an aromatic diamine such as meta-xylenediamine, or para-xylylenediamine.

The above descrived diamines may be used singly or in combination with two or more kinds thereof.

### - Chain Extending Agent-

As described above, for the polyamide-based thermoplastic elastomer, a chain extending agent, such as a dicarboxylic acid may be used in addition to the hard segment and the soft segment. As the dicarboxylic acid, at least one kind selected from aliphatic, alicyclic, or aromatic dicarboxylic acids or any derivative thereof may be used.

Specific examples of the dicarboxylic acid include a straight-chain aliphatic dicarboxylic acid having 2 to 25 carbon atoms, such as adipic acid, decanedicarboxylic acid, oxalic acid, succinic acid, glutaric acid, pimelic acid, suberic acid, azelaic acid, sebacic acid or dodecanedioic acid; an aliphatic dicarboxylic acid, such as a dimerized aliphatic dicarboxylic acid having 14 to 48 carbon atoms that is obtained by dimerizing a saturated fatty acid obtained from the fractionation of a triglyceride or a hydrogen added product of the dimerized aliphatic dicarboxylic acid, an alicyclic dicarboxylic acid, such as 1,4-cyclohexane dicarboxylic acid, and an aromatic dicarboxylic acid, such as terephthalic acid or isophthalic acid.

### - Molecular Weight -

In the invention, the weight-average molecular weight of the polyamide-based thermoplastic elastomer included in the resin material is preferably from 10,000 to 300,000.

Due to the weight-average molecular weight of the polyamide-based thermoplastic elastomer being more than or equal to 10,000, increase in the stiffness of the resin material is enabled, resulting in improvement in the pressure resistance of a tire. In addition, due to the weight-average molecular weight of the polyamide-based thermoplastic elastomer being less than or equal to 300,000, excessive stiffness of the resin material is prevented, and a material that is easy to be injection-molded is obtained.

The weight-average molecular weight of the polyamide-based thermoplastic elastomer is more preferably from 10,000 to 200,000. The weight-average molecular weight of the polyamide-based thermoplastic elastomer can be measured by Gel Permeation Chromatography (GPC), and a GPC system such as "HLC-8320 GPC EcoSEC" from TOSOH CORPORATION is available.

The number average molecular weight of the polymer which forms the hard segment (polyamide) is preferably from 300 to 15,000 from the viewpoint of the melt molding property thereof. The number average molecular weight of the polymer which forms the soft segment is preferably from 200 to 6,000 from the viewpoint of the toughness and the low temperature flexibility thereof.

In the polyamide-based thermoplastic elastomer, the ratio (HS/SS) of the mass of the hard segment (HS) to that of the soft segment (SS) is preferably from 55/45 to 90/10 from the viewpoint of the pressure resistance of a tire, and more preferably from 55/45 to 85/15.

The content of the hard segment in the polyamide-based thermoplastic elastomer is preferably from 5 to 95 mass%, more preferably from 10 to 90 mass % by mass, and particularly preferably from 15 to 90 mass% to the total amount of the polyamide-based thermoplastic elastomer.

The content of the soft segment in the polyamide-based thermoplastic elastomer is preferably from 10 to 95 mass%, more preferably from 10 to 90 mass %, and particularly preferably from 10 to 90 mass% to the total amount of the polyamide-based thermoplastic elastomer.

When the chain extending agent is used, the content thereof is preferably set so that the molar number of the hydroxyl groups or the amino groups of the monomer which forms the soft segment is approximately equal to that of the carboxyl groups of the chain extending agent.

The polyamide-based thermoplastic elastomer can be synthesized by polymerizing, by using well-known methods, a polymer which forms the hard segment and a polymer which forms the soft segment. For instance, the polyamide-based thermoplastic elastomer can be obtained by polymerizing in a vessel a monomer which forms the hard segment (for example, an ω-aminocarboxylic acid such as 12-aminododecanoic acid or a lactam such as lauryl lactam), a monomer which forms the soft segment (for example, the ABA-type triblock polyether or the ABA-type triblock polyether diamine), and a chain extending agent (for example, adipic acid or decanedicarboxylic acid). In particular, when an ω-aminocarboxylic acid is used as a monomer which forms the hard segment, the synthesis can be done by performing melt-polymerization at ambient pressure, or melt-polymerization at ambient pressure followed by melt-polymerization at reduced pressure. When lactam is used as a monomer which forms the hard segment, the elastomer can be manufactured by a method consisting of melt polymerization under a pressure of from 0.1 to 5MPa with the coexistence of an appropriate amount of water, followed by melt-polymerization at ambient pressure and/or melt-polymerization at reduced pressure. These synthetic reactions can be performed either in a batch method or in a continuous method. For the above-mentioned synthetic reactions, a batch type reaction tank, a single-tank type or multi-tank type continuous reaction device, a tube-shaped continuous reaction device, and so on may be used alone or in combination with each other, if appropriate.

In manufacturing the polyamide-based thermoplastic elastomer, polymerization temperature is preferably from150°C to 300°C from the viewpoint of the crystallinity of the hard segment to be from 14% to 26%, and more preferably from 160°C to 280°C. Polymerization time can be appropriately determined from the relation between the polymerization average molecular weight of a polyamide-based thermoplastic elastomer to be synthesized and the polymerization temperature thereof, and is preferably from 0.5 hours to 30 hours, and more preferably from 0.5 to 20 hours.

In manufacturing the polyamide-based thermoplastic elastomer, additives such as monoamines or diamines, for example, lauryl amine, stearylamine, hexamethylenediamine, and meta-xylenediamine, or monocarboxylic acids or dicarboxylic acids, for example, acetic acid, benzoic acid, stearic acid, adipic acid, sebacic acid, and dodecanedioic acid may be added in roder to adjust molecular weight and stabilize melt viscosity during mold processing, as needed. These additives can be selected in condideration of properties, such as molecular weight and viscosity, of a polyamide-based thermoplastic elastomer to be obtained so long as the additives do not adversely affect the advantageous effects of the invention.

In manufacturing the polyamide-based thermoplastic elastomer, catalysts can be used, as needed. Examples of the catalysts include a compound containing at least one kind selected from the group consisting of P, Ti, Ge, Zn, Fe, Sn, Mn, Co, Zr, V, Ir, La, Ce, Li, Ca, and Hf.

Examples of the catalysts include, for example, inorganic phosphoric compounds, organic titanium compounds, organic zirconium compounds, and organotin compounds.

Specifically, examples of the inorganic phosphoric compounds include a phosphorus acid such as phosphoric acid, pyrophosphoric acid, polyphosphoric acid, phosphorous acid, or hypophosphorous acid, an alkali metal salt of the phosphorus acid, and an alkaline earth metal salt of the phosphorus acid.

Examples of the organic titanium compounds include a titanium alkoxide [such as titanium tetrabutoxide, or titanium tetraisopropoxide].

Examples of the organic zirconium compounds include a zirconium alkoxide [such as zirconium tetrabutoxide (also refered to as "Zr(OBu)₄" or "Zr(OC₄H₈)₄")].

Examples of the organotin compounds include a distannoxane compound [such as 1-hydroxy -3-isothiocyanate-1,1,3,3-tetrabutyl distannoxane], tin acetate, dibutyl tin dilaurate, and butyltin hydroxide oxide hydrate.

The amount of the catalyst to be added and the timing of the addition are not particularly limited so long as these conditions can provide a target product rapidly.

As the polyamide-based thermoplastic elastomer, preferred combinations are, for example, a combination of a ring-opening polycondensate of lauryl lactam/polyethylene glycol/adipic acid, a combination of a ring-opening polycondensate of lauryl lactam/polypropylene glycol/adipic acid, a combination of a ring-opening polycondensate of lauryl lactam/polytetramethylene ether glycol/adipic acid, a combination of a ring-opening polycondensate of lauryl lactam/an ABA-type triblock polyether/adipic acid, a combination of a ring-opening polycondensate of lauryl lactam/an ABA-type triblock polyether diamine/decanedicarboxylic acid, a combination of a ring-opening polycondensate of lauryl lactam/polyethylene glycol/decanedicarboxylic acid, a combination of a ring-opening polycondensate of lauryl lactam/polypropylene glycol/decanedicarboxylic acid, a combination of a ring-opening polycondensate of lauryl lactam/polytetramethylene ether glycol/decanedicarboxylic acid, a combination of a ring-opening polycondensate of lauryl lactam/an ABA-type triblock polyether/decanedicarboxylic acid, a combination of a ring-opening polycondensate of lauryl lactam/an ABA-type triblock polyether diamine/decanedicarboxylic acid, a combination of a polycondensate of aminododecanoic acid/polyethylene glycol/adipic acid, a combination of a polycondensate of aminododecanoic acid/polypropylene glycol/adipic acid, a combination of a polycondensate of aminododecanoic acid/poly tetramethylene ether glycol/adipic acid, a combination of a polycondensate of aminododecanoic acid/an ABA-type triblock polyether/adipic acid, a combination of a polycondensate of aminododecanoic acid/an ABA-type triblock polyether diamine/adipic acid, a combination of a polycondensate of aminododecanoic acid/polyethylene glycol/decanedicarboxylic acid, a combination of a polycondensate of aminododecanoic acid/polypropylene glycol/decanedicarboxylic acid, a combination of a polycondensate of aminododecanoic acid/polytetramethylene ether glycol/decanedicarboxylic acid, a combination of a polycondensate of aminododecanoic acid/an ABA-type triblock polyether/decanedicarboxylic acid, and a combination of a polycondensate of aminododecanoic acid/an ABA-type triblock polyether diamine/decanedicarboxylic acid.

In addition, particularly preferred combinations are a combination of a ring-opening polycondensate of lauryl lactam/an ABA-type triblock polyether/adipic acid, a combination of a polycondensate of aminododecanoic acid/an ABA-type triblock polyether/adipic acid, a combination of a polycondensate of aminododecanoic acid/an ABA-type triblock polyether diamine/decanedicarboxylic acid, a combination of a polycondensate of aminododecanoic acid/polytetramethylene ether glycol/adipic acid, and a combination of a polycondensate of aminododecanoic acid/polytetramethylene ether glycol/decanedicarboxylic acid.

As the polyamide-based thermoplastic elastomer, a combination of preferred aspects can be used in which a combination, the constitutional ratio, the molecular weight, and so on of a constituent unit have been described above.

The resin material may contain various additives such as rubber, various fillers (such as silica, calcium carbonate and cray), a rubber antioxidant, oil, a plasticizer, a colorant, a weathering stabilizer, and a reinforcing material. The additives have no particular limitation on the content thereof in the resin material (tire frame) and may be used, if appropriate, so long as the additives do not harm the advantageous effects of the invention. When a component such as the additive other than the resin material is added, the content of a resin component in the resin material is preferably 50 mass% or more, and more preferably 90 mass% or more with respect to the total amount. The content of the resin component in the resin material is a remaining part after subtracting the total content of the various additives from the total amount of the resin material.

### (Physical Properties of Resin Material)

Next, preferred physical properties of a resin material from which a tire frame is made will be described. The tire frame in the invention is formed by using the above-mentioned resin material.

The melting point (or softening point) of the resin material (tire frame) itself is usually from about 100°C to about 350°C, preferably from about 100°C to about 250°C, and from the viewpoint of the productivity of a tire, preferably from about 120°C to 250°C, and more preferably from 120°C to 200°C.

Thus, when the tire frame of a tire is made, for example, by fusing the divided bodies thereof (frame fragment), sufficient adhesion intensity between the tire frame fragments can be obtained by using a resin material having a melting point of from 120°C to 250°C, even if the body is formed by the fusion at an ambient temperature within a range from 120°C to 250°C. Accordingly, the tire of the invention is superior in durability during driving, such as blow-out resistance, or wear resistance. The heating temperature is preferably 10°C to 150°C higher than the melting point (or softening point) of the resin material from which the tire skeleton piece is made, and more preferably 10°C to 100°C higher.

The resin material can be obtained by adding thereto and, if appropriate, mixing various additives by well-known methods (for example melt mixing).

The resin material obtained by melt mixing can be used, as needed, in the form of a pellet.

The tensile yield strength of the resin material itself (tire frame) defined in JIS K7113:1995 is preferably 5MPa or more, preferably from 5MPa to 20MPa, and more preferably from 5MPa to 17MPa. When the tensile yield strength of the resin material is 5MPa or more, the tire can endure deformation due to a load thereon during driving.

The tensile yield elongation of the resin material itself (tire frame) defined in JIS K7113:1995 is preferably 10% or more, preferably from 10% to 70% and more preferably from 15% to 60%. When the tensile yield elongation of the resin material is 10% or more, the elastic region of the material can become large, resulting in the improved air-sealing property thereof.

The tensile breaking elongation of the resin material itself (tire frame) defined in JIS K7113:1995 is preferably 50% or more, preferably 100% or more, more preferably 150% or more, and particularly preferably 200% or more. When the tensile breaking elongation of the resin material is 50% or more, the air-sealing property of the material is excellent and the collisional destruction of the resin can be suppressed.

The load deflection temperature (under 0.45MPa load) of the resin material itself (tire frame) defined in ISO75-2 or ASTM D648 is preferably 50°C or more, preferably from 50°C to 150°C, and more preferably from 50°C to 130°C. When the load deflection temperature of the resin material is 50°C or more, the deformation of the tire frame can be suppressed even if vulcanization is performed during manufacturing the tire.

A tire of the present embodiment will now be described according to the drawings.

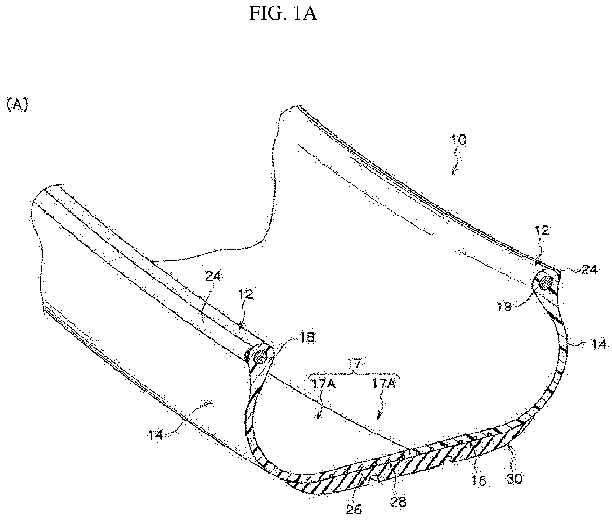

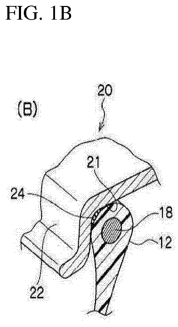

The description will be made for a tire 10 of the embodiment. FIG. 1A is a perspective view of the cross-section of a part of a tire according to one embodiment of the invention. FIG. 1B is a cross-sectional view of a bead partion fitted to a rim. As shown in FIG. 1A, the tire 10 according to the present embodiment has substantially the same cross-sectional shape as those of conventional general rubber pneumatic tires.

As shown in Fig. 1A, the tire 10 includes a tire case 17 composed of: a pair of bead portions 12 each contacting with a bead seat 21 and a rim flange 22 of a rim 20 shown in Fig. 1B; side portions 14 that extend from the bead portions 12 toward the outer side in the tire radial direction; and a crown portion 16 (outer peripheral portion) that connect the outer end in the tire radial direction of one side portion 14 and the outer end in the tire radial direction of the other side portion 14.

In the tire case 17 according to the present embodiment, for example, a resin material in which respective additives are included in the polyamide-based thermoplastic elastomer including a soft segment and a hard segment having a crystallinity of 14% to 26% in a molecule thereof, can be used.

Although the tire case 17 according to the preesnt embodiment is formed of a single resin material, the invention is not limited to this configuration, and a thermoplastic resin materials having different characteristics may be used for respective portions of the tire case 17 (such as the side portions 14, the crown portion 16, and the bead portions 12), similarly to conventional general rubber pneumatic tires. A reinforcing material (such as fiber, cord, unwoven fabric, and woven fabric which are formed of a polymer material or a metal) may be disposed to be embedded in the tire case 17 (such as in the bead portions 12, in the side portions 14, or in the crown portion 16) so as to reinforce the tire case 17 with the reinforcing material.

The tire case 17 according to the present embodiment is formed by bonding a pair of tire case half parts (tire frame pieces) 17A formed of a resin material to each other. The tire case half parts 17A is formed by placing circular tire case half parts 17A that have the same shape and that are obtained by molding one bead portion 12, one side portion 14, and a half-width of the crown portion 16 as an integral body by injection molding or the like, to face each other, and bonding the half parts to each other at the tire equatorial plane portion. The tire case 17 is not limited to that obtained by bonding two members, and may be formed by bonding three or more members.

The tire case half part 17A formed of a resin material can be molded by, for example, vacuum molding, pressure molding, injection molding, or melt casting. Accordingly, when compared with a conventional case in which the tire case is molded from rubber, it is not necessary to perform vulcanization, as a result of which the production process can remarkably be simplified, and the molding time can be saved.

In the present embodiment, the tire case half parts 17A have a symmetric shape, that is, one tire case half part 17A and the other tire case half part 17A have the same shape; therefore, there is an advantage in that the tire case half parts 17A can be molded using only one type of mold.

In the present embodiment, as shown in Fig. 1B, an annular bead core 18 formed of a steel cord is embedded in each bead portion 12, similarly to conventional general pneumatic tire. However, the invention is not limited to this configuration; the bead core 18 may be omitted as long as the rigidity of the bead portions 12 is ensured and there is no problem in fitting to the rim 20. Other than the steel cord, the bead core may be formed of an organic fiber cord, a resin-coated organic fiber cord, a hard resin, or the like.

In the present embodiment, an annular sealing layer 24 formed of a material having higher sealing properties than those of the resin material constituting the tire case 17, for example rubber, is provided on a part of the bead portion 12 that contacts the rim 20 or at least on a part of the bead portion 12 that contacts the rim flange 22 of the rim 20. The sealing layer 24 may also be provided in a part in which the tire case 17 (the bead portion 12) and the bead seat 21 contact each other. A material softer than the resin material that constitutes the tire case 17 may be used as the material having higher sealing properties than those of the resin material that constitutes the tire case 17. It is preferable to use, as a rubber usable for the sealing layer 24, the same kind of rubber as a rubber used on the outer surface of a bead portion of a conventional general rubber pneumatic tire. Further, oher thermoplastic resins (thermoplastic elastomers) having higher sealing properties than those of the resin material may be used. Examples of other thermoplastic resins include resins such as a polyurethane-based resin, a polyolefin-based resin, a polystyrene-based resin, and a polyester resin, and a blend of any of these resins with a rubber or an elastomer. Thermoplastic elastomers can also be used, and examples thereof include a polyester-based thermoplastic elastomer, a polyurethane-based thermoplastic elastomer, a polystyrene-based thermoplastic elastomer, and a polyolefin-based thermoplastic elastomer, and any combination of these elastomers and a blend of any of these elastomers with a rubber.

As shown in Fig. 1A, in the crown portion 16, a reinforcing cord 26 having higher rigidity than that of the resin material constituting the tire case 17 is wound in the circumferential direction of the tire case 17. The reinforcing cord 26 is helically wound to form a reinforcing cord layer 28 in a state in which at least a part of the reinforcing cord 26 is embedded in the crown portion 16 in a cross-sectional view taken along the axial direction of the tire case 17. A crown 30 formed of a material, such as rubber, having higher abrasion resistance than that of the resin material constituting the tire case 17 is disposed on the outer circumference side in the tire radial direction of the reinforcing cord layer 28.

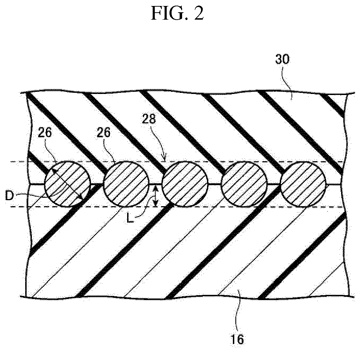

The reinforcing cord layer 28 formed by the reinforcing cord 26 will be described below with reference to Fig. 2. Fig. 2 is a cross-sectional view taken along the tire rotation axis, which illustrates a state in which the reinforcing cord is embedded in the crown portion of the tire case of the tire according to presednt embodiment. As shown in Fig. 2, the reinforcing cord 26 is helically wound in a state in which at least a part of the reinforcing cord 26 is embedded in the crown portion 16 in a cross-sectional view taken along the axial direction of the tire case 17, and, together with a part of the outer circumferential portion of the tire case 17, forms the reinforcing cord layer 28 specified by the dotted lines in Fig. 2. The part of the reinforcing cord 26 that is embedded in the crown portion 16 is in close contact with the resin material constituting the crown portion 16 (the tire case 17). A monofilament (single filament) of a metal fiber, an organic fiber, or the like, or a multifilament (stranded filament) in which fibers are stranded, such as a steel cord composed of steel fibers, may be used as the reinforcing cord 26. In the present embodiment, a steel cord is used as the reinforcing cord 26.

The embedding depth L in Fig. 2 represents the depth of embedding of the reinforcing cord 26 in the tire case 17 (the crown portion 16) in the tire rotation axis direction. The depth of embedding L of the reinforcing cord 26 in the crown portion 16 is preferably equal to or greater than 1/5 of the diameter D of the reinforcing cord 26, and more preferably more than 1/2 of the diameter D of the reinforcing cord 26. It is most preferable that the entire reinforcing cord 26 be embedded in the crown portion 16. When the depth of embedding L of the reinforcing cord 26 is more than 1/2 of the diameter D of the reinforcing cord 26, the reinforcing cord 26 is difficult to drop off from the embedded portion due to the dimensions of the reinforcing cord 26. When the reinforcing cord 26 is entirely embedded in the crown portion 16, the surface (the outer circumferential surface) becomes flat, whereby entry of air into an area around the reinforcing cord can be suppressed even when a member is placed on the crown portion 16 in which the reinforcing cord 26 is embedded. The reinforcing cord layer 28 corresponds to a belt disposed on the outer circumferential surface of a carcass of a conventional rubber pneumatic tire.

As described above, the crown 30 is disposed on the outer circumferential side in the tire radial direction of the reinforcing cord layer 28. It is preferable that the same kind of rubber as that used for conventional rubber pneumatic tires is used as the rubber used for the crown 30. It is also possible to use, instead of the crown 30, a crown formed of another kind of resin material which has higher abrasion resistance than that of the resin material constituting the tire case 17. In the crown 30, a crown pattern composed of plural grooves is formed on the contact surface that comes into contact with a road surface, similarly to conventional rubber pneumatic tires.

A method of producing a tire of the present embodiment will be described below.

### (Tire Case Forming Step)

First, tire case half parts are formed by using the resin material containing the polyamide-based thermoplastic elastomer as described above. The forming of these tire cases is preferably performed by injection-molding. In the forming, the resin material is preferably injected into a metal mold at 200°C to 250°C from the standpoint of making the crystallinity of the hard segment of the polyamide-based thermoplastic elastomer 14% to 26%. Further, a molten resin injected into the metal mold, which has a temperature 30°C to 80°C, is removed preferably after cooling for 30 seconds or more.

Then, tire case half parts supported by thin metal support rings are arranged to face each other. Subsequently, a mold for bonding, which is not shown in the drawings, is placed so as to contact the outer circumferential surface of a portion at which the tire case half parts are contacted with each other. Here, the mold for bonding is configured to pressurize a region at or around the bonding section (the contact portion) of the tire case half parts 17A with a predetermined pressure. Then, the region at or around the bonding section of the tire case half parts is pressurized at a temperature equal to or higher than the melting point (or softening point) of the resin material that constitutes the tire case. When the bonding section of the tire case half parts is heated and pressurized by the mold for bonding, the bonding section is melted, and the tire case half parts are fused with each other, as a result of which the members are integrated to form the tire case 17. Although the bonding section of the tire case half parts is heated using the mold for bonding in the present embodiment, the invention is not limited to this configuration; heating of the bonding section may be carried out using, for example, a separately-provided high-frequency heater, or the tire case half parts may be bonded by softening or melting the bonding section, in advance, via application of hot air, irradiation of infrared rays or the like, and pressurizing the bonding section using the mold for bonding.

### (Reinforcing Cord Member Winding Step)

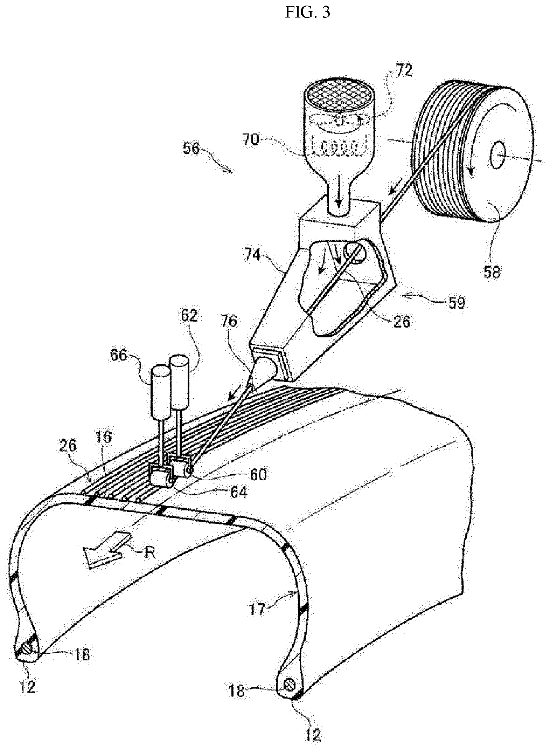

Next, a reinforcing cord winding step will be described below using Fig. 3. Fig. 3 is an explanatory diagram explaining an operation of embedding the reinforcing cord in the crown portion of the tire case using a cord heating device and rollers. In Fig. 3, a cord feeding apparatus 56 includes a reel 58 on which a reinforcing cord 26 is wound, a cord heating device 59 disposed at the downstream side in the cord feeding direction of the reel 58, a first roller 60 disposed at the downstream side in the reinforcing cord 26 feeding direction, a first cylinder unit 62 for moving the first roller 60 in directions in which the first roller comes into contact with and get away from the outer circumferential surface of the tire, a second roller 64 disposed at the downstream side in the reinforcing cord 26 feeding direction of the first roller 60, and a second cylinder unit 66 for moving the second roller 64 in directions in which the first roller comes into contact with and get away from the outer circumferential surface of the tire. The second roller 64 can be used as a cooling roller formed of metal. In the present embodiment, the surface of the first roller 60 or the second roller 64 is coated with a fluororesin (TEFLON (registered trademark) in the case of the present embodiment) with a view to suppressing adhesion of the melted or softened resin matereial. Although the cord feeding apparatus 56 is configured to have two rollers of the first roller 60 and the second roller 64 in the present embodiment, the invention is not limited to this configuration, and the cord feeding apparatus may be configured to have only one of these rollers (that is, a single roller).

The cord heating device 59 includes a heater 70 and a fan 72 that generate hot air. The cord heating device 59 includes a heating box 74 into which hot air is supplied and in which the reinforcing cord 26 passes through the inside space thereof, and an discharge port 76 through which the heated reinforcing cord 26 is discharged.

In this step, first, the temperature of the heater 70 of the cord heating device 59 is increased, and the air around the heater 70 heated by the heater 70 is sent to the heating box 74 by an air current generated by the rotation of the fan 72. Then, the reinforcing cord 26 drawn out from the reel 58 is fed to the inside of the heating box 74 of which the inner space is heated with hot air, whereby the reinforcing cord 25 is heated (for example, to increase the temperature of the reinforcing cord 26 to be about 100°C to about 200°C). The heated reinforcing cord 26 passes through the discharge port 76, and is helically wound, with a constant tension, around the outer circumferential surface of the crown portion 16 of the tire case 17 rotating in the direction of arrow R in Fig. 3. Here, as a result of the heated reinforcing cord 26 coming into contact with the outer circumferential surface of the crown portion 16, the resin material at the contact portion is melted or softened, and at least a part of the heated reinforcing cord 26 is embedded in the outer circumferential surface of the crown portion 16. In this process, since the heated reinforcing cord 26 is embedded in the melted or softened resin material, the resin material and the reinforcing cord 26 get into a state in which no space is left between the resin material and the reinforcing cord 26, that is, in a tightly-contacted state. Accordingly, the incorporation of air into the portion in which the reinforcing cord 26 is embedded is suppressed. By heating the reinforcing cord 26 to a temperature higher than the melting point of the resin material of the tire case 17, the melting or softening of the resin material in the portion contacting the reinforcing cord 26 is promoted. By employing this configuration, embedding of the reinforcing cord 26 in the outer circumferential surface of the crown portion 16 is facilitated, and the incorporation of air can effectively be suppressed.

The depth L of embedding of the reinforcing cord 26 can be adjusted by the heating temperature for the reinforcing cord 26, the tension applied to the reinforcing cord 26, the pressure applied from the first roller 60, etc. In the present embodiment, the depth L of embedding of the reinforcing cord 26 is set to be equal to or greater than 1/5 of the diameter D of the reinforcing cord 26. The depth L of embedding of the reinforcing cord 26 is more preferably more than 1/2 of the diameter D, and it is still more preferable that the entire reinforcing cord 26 is embedded.

In this way, a reinforcing cord layer 28 is formed on the outer circumference side of the crown portion 16 of the tire case 17 by winding the heated reinforcing cord 26 on the outer circumferential surface of the crown portion 16 such that the heated reinforcing cord 26 is embedded in the outer circumferential surface of the crown portion 16.

A belt-shaped vulcanized crown 30 is wound on the outer circumferential surface of the tire case 17 for one revolution, and the crown 30 is bonded to the outer circumferential surface of the tire case 17 using, for example, an adhesive. For example, precured crowns known thus far for use in retreaded tires may be used as the crown 30. This step is a step similar to a step of bonding a precured crown to the outer circumferential surface of a casing of a retreaded tire.

A tire 10 can be completed by bonding a sealing layer 24 formed of a vulcanized rubber to the bead portion 12 of the tire case 17 using, for example, an adhesive.

In addition, an anneal treatment of heating the tire 10 may also be performed after the completion of the tire 10. The anneal treatment after the completion of the tire also enables the adjustment of the crystallinity of the hard segment of the polyamide-based thermoplastic elastomer contained in the resin material. Heating temperature in the anneal treatment is preferably from the glass transition temperature to 140°C and more preferably from 50°C to 140°C. After heating the tire 10, gradual cooling to room temperature (for example, 25°C) is preferable.

### (Effects)

The tire 10 according to the present embodiment has excellent pressure resistance, since the tire case 17 is formed of a resin material which includes a polyamide-based thermoplastic elastomer having a soft segment and a hard segment having crystallinity of 14% to 26% in a molecule thereof. In addition, since the tire 10 has a structure that is simpler than those of conventional rubber tires, the weight thereof is small. Therefore, the tire 10 according to the present embodiment has excellent abrasion resistance and durability. Further, excellent productivity is exhibited since the tire case 17 can be injection-molded.

In the tire 10 according to the present embodiment, on the outer circumferential surface of the crown portion 16 of the tire case 17 formed of a resin material, the reinforcing cord 26 having higher rigidity than that of the resin material is helically wound in the circumferential direction, as a result of which puncture resistance, cutting resistance, and rigidity in the circumferential direction of the tire 10 are improved. The improved rigidity in the circumferential direction of the tire 10 prevents creeping of the tire case 17 formed of a resin material.

In a cross-sectional view taken along the axial direction of the tire case 17 (the cross-section shown in Fig. 1), at least a part of the reinforcing cord 26 is embedded in the outer circumferential surface of the crown portion 16 of the tire case 17 formed of the resin material, and is in close contact with the resin material, as a result of which incorporation of air during production is suppressed, and movement of the reinforcing cord 26 due to, for example, a force applied at the time of traveling is suppressed. Accordingly, separation between the reinforcing cord 26, the tire case 17, and the crown 30 is suppressed, and the durability of the tire 10 is improved.

In a case in which the reinforcing cord layer 28 is configured to include the resin material as described above, the reinforcing cord 26 can be made to more tightly contact the tire case 17 and fixed to the tire case 17 since the difference in hardness between the tire case 17 and the reinforcing cord layer 28 can be made smaller than that in a case in which the reinforcing cord 26 is fixed using a cushion rubber. Accordingly, the incorporation of air mentioned above can effectively be prevented, and the movement of the reinforcing cord member at the time of traveling can effectively be suppressed.

In a case in which the reinforcing cord 26 is a steel cord, the reinforcing cord 26 can easily be separated from the resin material by heating and recovered at the time of disposing of the tire, and, therefore, there is an advantage from the viewpoint of recyclability of the tire 10. Further, since the resin material has a lower loss factor (tan δ) compared with vulcanized rubbers, inclusion of a large amount of resin material in the reinforcing cord layer 28 makes it possible to enhance the rolling properties of the tire. Compared with vulcanized rubbers, the resin material has advantages in terms of high in-plane shear stiffness, excellent steering stability at the time of traveling with the tire, and excellent abrasion resistance.

As shown in Fig. 2, since the depth L of embedding of the reinforcing cord 26 is set to be equal to or greater than 1/5 of the diameter D thereof, incorporation of air during production is effectively suppressed, and movement of the reinforcing cord 26 due to a force applied at the time of traveling is further suppressed.

Since the crown 30 that contacts a road surface is formed of a rubber material having higher abrasion resistance than that of the polyamide-based thermoplastic elastomer, the abrasion resistance of the tire 10 is improved.

Since the annular bead core 18 formed of a metal material is embedded in the bead portion 12, the tire case 17 is strongly fixed to the rim 20, i.e., the tire 10 is strongly fixed to the rim 20, similarly to conventional rubber pneumatic tires.

Since the sealing layer 24 formed of a rubber material having higher sealing ability than the resin material constituing the tire case 17 is disposed in a region of the bead portion 12 that contacts the rim 20, sealing between the tire 10 and the rim 20 can be further improved.

Although a configuration in which the reinforcing cord 26 is heated such that a portion of the surface of the tire case 17 that contacts the heated reinforcing cord 26 is melted or softened is adopted in the embodiment described above, the invention is not limited to this configuration; a hot air generating device may be used, instead of heating the reinforcing cord 26, to heat the outer circumferential surface of the crown portion 16 in which the reinforcing cord 26 is to be embedded, and the reinforcing cord 26 may thereafter be embedded in the crown portion 16.

Although the heat source of the cord heating device 59 includes the heater and the fan in the present embodiment, the invention is not limited to this configuration, and a configuration in which the reinforcing cord 26 is directly heated by radiation heat (for example, infrared rays) may be adopted.

Still further, although a configuration in which a region at which the resin material with the reinforcing cord 26 embedded therein is melted or softened is forcibly cooled with the second roller 64 formed of metal is adopted in the present embodiment, the invention is not limited to this configuration; a configuration in which cold air is directly applied to the region at which the thermoplastic resin material is melted or softened, to forcibly cool and solidify the region at which the resin material is melted or softened may also be adopted

Still further, a configuration in which the reinforcing cord 26 is heated is adopted in the present embodiment, a configuration in which the outer circumference of the reinforcing cord 26 is coated with the same resin material as that of the tire case 17, for example, may be adopted. In this case, by heating the coated resin material along with the reinforcing cord 26 when the coated reinforcing cord is wound on the crown portion 16 of the tire case 17, incorporation of air can effectively be suppressed at the time of embedding the reinforcing cord in the crown portion 16.

Helically winding the reinforcing cord 26 is easy from the viewpoint of production. However, a method in which the reinforcing cord 26 is discontinuous in the width direction, for example, may also be contemplated.

Although the tire 10 according to the present embodiment is a so-called tubeless tire in which an air chamber is formed between the tire 10 and the rim 20 by fitting the bead portion 12 to the rim 20. However, the invention is not limited to this configuration, and a complete tube shape may be adopted. The tire according to the invention may be an embodiment which uses a reinforcing cord member including a cord member covered by resin material, as shown in a second embodiment (FIGs. 4 and 5) of JP-A No. 2012-46030.

Although modes for carrying out the invention are described above with reference to embodiments, the embodiments are merely examples, and may be practiced with various modifications within a range that does not depart from the gist of the inention. Of course, the protection scope of the invention is not limited to these embodiments.

### EXAMPLES

The invention will be described more specifically by using Examples. However, the invention is not limited these Examples.

### <Synthesis of Polymers>

### -Synthesis of Polyamide PA12 -

To a 50-litter pressure vessel equipped with a stirrer, a thermometer, a torque meter, a pressure meter, an inlet for nitrogen gas, a pressure controlling device, and an outlet for polymer were added 14.95 kg of lauryl lactam, 1.09 kg of 12-aminododecanoic acid, and 1.96 kg of decanedicarboxylic acid. The inside of the pressure vessel was heated up to 280°C, and the added components were stirred for two hours.

Then, the inside of the pressure vessel was sufficiently nitrogen-purged followed by two hours of polymerization (polymerization reaction A) at 280°C while nitrogen gas was supplied, and polyamide PA 12 (NYLON 12) both terminals of which are carboxy groups was obtained. Note that NYLON is a trademark.

### - Synthesis of Polyamide-Based Thermoplastic Elastomer TPA 1 -

The polymerization reaction A was done in the same manner as the synthesis of PA 12, and then, 3.39 kg of PTMG (poly tetramethylene ether glycol; average molecular weight 650) were added to PA 12 (14.61 kg). Then, the mixture was heated up to 200°C before the addition of a 5.1 g of catalyst [Zr(OC₄H₈)₄], and after the onset of stirring, the inside of the pressure vessel was heated up to 260°C and vacuumized by a vacuum pump. Then, polymerization reaction was done with three hours of stirring to obtain a polyamide-based thermoplastic elastomer TPA 1.

### - Synthesis of Polyamide-Based Thermoplastic Elastomer TPA 2 -

In a 50-litter pressure vessel equipped with a stirrer, a thermometer, a torque meter, a pressure meter, an inlet for nitrogen gas, a pressure controlling device, and an outlet for polymer were added 11.24 kg of 12-aminododecanoic acid, 3.21 kg of an ABA-type triblock polyether diamine (trade name "XTJ-542", Huntsman Corporation), and 0.67 kg of adipic acid.

Then, after the inside of the pressure vessel was sufficiently nitrogen-purged, the pressure in the pressure vessel was adjusted to 0.05 MPa, and the temperature therein was raised from room temperature to 240°C while nitrogen gas was supplied. Two hours of polymerization was done at 240°C with the pressure in the pressure vessel adjusted to 0.05MPa.

Then, after the flow rate of nitrogen gas was slowed down, the inside of the vessel was vacuumized by the vacuum pump followed by 5.5 hours of polymerization at 240°C to obtain a polyamide-based thermoplastic elastomer TPA 2.

### - Synthesis of Polyamide-Based Thermoplastic Elastomer TPA 3 -

In a 50-litter pressure vessel equipped with a stirrer, a thermometer, a torque meter, a pressure meter, an inlet for nitrogen gas, a pressure controlling device, and an outlet for polymer were added 7.9 kg of 12-aminododecanoic acid, 8.54 kg of an ABA-type triblock polyether diamine (trade name "XTJ-542", Huntsman Corporation), and 1.56kg of adipic acid.

Then, after the inside of the pressure vessel was sufficiently nitrogen-purged, the pressure in the pressure vessel was adjusted to 0.05 MPa, and the temperature therein was raised from room temperature to 240°C while nitrogen gas was supplied. Two hours of polymerization was done at 240°C under the pressure in the pressure vessel adjusted to 0.05 MPa.

Then, after the flow rate of nitrogen gas was slowed down, the inside of the vessel was vacuumized by the vacuum pump followed by 5.5 hours of polymerization at 240°C to obtain a polyamide-based thermoplastic elastomer TPA 3.

In the synthesis of PA 12, and TPA 1 to TPA 3, lauryl lactam, 12-aminododecanoic acid, decanedicarboxylic acid, adipic acid, and Zr(OC₄H₈)₄ were regents all from ALDRICH CHEMICAL COMPANY, INC. PTMG was from Wako Pure Chemical Industries, Ltd.

### <Tire Fabrication>

### [Example 1] (not according to the invention)

According to the above-mentioned embodiment, a tire of Example 1 was fabricated by injection-molding TPA 1 at 250°C

### [Example 2] (not according to the invention)

The tire fabricated in the Example 1 was subjected to an anneal treatment of heating at 150°C for three hours to fabricate a tire Example 2. At this time, as a material for making the tire case, a material described in the column "polymer type" of Table 1 were used.

### [Example 3]

According to the above-mentioned embodiment, a tire of Example 3 was fabricated by injection-molding TPA 2 at 250°C.

### [Example 4]

The tire fabricated in Example 3 was subjected to an anneal treatment of heating at 150°C for three hours to fabricate a tire of Example 4.

### [Comparative Example 1]

According to the above-mentioned embodiment, TPA 3 was injection-molded at 200°C to fabricate a tire of Comparative example 1.

### [Example 5]

The tire fabricated in Comparative Example 1 was subjected to an anneal treatment of heating at 150°C for three hours to fabricate a tire of Example 5.

### [Comparative example 2]

According to the above-mentioned embodiment, PA 12 was injection-molded at 250°C to fabricate a tire of Comparative Example 2.

### [Measurement of Crystallinity]

The crystallinity of the polyamide PA12 and the crystallinities of the hard segments of the polyamide-based thermoplastic elastomers TPA 1 to TPA 3 were measured in the following manner by using a DSC Q2000 produced by TA Instruments Japan Inc.

By heating the elastomers TPA 1 to TPA 3 from 0°C to 200°C at a rate of 10°C/minute, the melting heat quantity of the crystalline parts of the hard segments was measured to calculate the crystallinity. The melting heat quantity of the crystalline part of the PA 12 was also measured to calculate the crystallinity.

The results are listed in the "crystallinity (%)" row in Table 1.

The melting heat quantity was obtained on the basis of a base-line drawn from the melt onset temperature to the melt completion temperature.

### [Pressure Resistance (Safety)]

The tires fabricated in each of the Examples and the Comparative Examples were fitted or attempted to be fitted to a rim, and the tire of Comparative Example 2 could not be fitted to the rim.

The tires of the Examples and the Comparative Examples that were fitted to the rim were filled with air under pressure, and the blowout pressure thereof was measured. At that time, the pressure resistance of each of the tires was evaluated and expressed as an index expression in which the blowout pressure of the tire in Comparative Example 1 was designated as 100. The results are listed in the "safety" row in the Table 1. A larger value in the "safety" row in Table 1 represents a better pressure resistance.

**[Table 1]**

| | | Example 1* | Example 2* | Example 3 | Example 4 | Example 5 | Comparative example 1 | Comparative example 2 |
|---|---|---|---|---|---|---|---|---|
| Tire configuration | Polymer type | TPA 1 | TPA 1 | TPA 2 | TPA 2 | TPA 3 | TPA 3 | PA 12 |
| | HS structure | NYLON 12 | | | | | | |
| | SS structure | PTMG | | PPG/PTMG/PPG | | | | - |
| | HS/SS | 81/19 | 81/19 | 82/18 | 82/18 | 52/48 | 52/48 | 100/0 |
| | Crystallinity (%) | 15 | 19 | 17 | 26 | 16 | 13 | 30 |
| Evaluation | Safety | 115 | 122 | 131 | 135 | 106 | 100 | - |

| | | | | | | | | |
|---|---|---|---|---|---|---|---|---|
| * (not according to the invention) | | | | | | | | |

In the Table 1, "HS structure" represents that polymers forming the hard segments of TPA 1 to TPA 3, or PA 12 are NYLON 12 (NYLON is a trademark). "SS structure" represents that polymers forming the hard segments of TPA 1 toTPA 3 are PTMG, or PPG/PTMG/PPG.

"HS/SS" in the Table 1 represents the ratio of mass of the hard segment (HS) to the mass of the soft segment (SS) of TPA 1 to TPA 3.

Results described in the Table 1 show that the Comparative Examples in which the crystallinity of the hard segment of the polyamide-based thermoplastic elastomer in the tire is out of a range from 14% to 26% are inferior in pressure resistance to the Examples.

## Claims

1. A tire comprising: a circular tire frame formed of a resin material, wherein the resin material comprises a polyamide-based thermoplastic elastomer including a soft segment and a hard segment in a molecule thereof, the hard segment having a crystallinity of from 14% to 26%, the soft segment being formed of an ABA-type triblock polyether diamine.

2. The tire according to claim 1, wherein a ratio (HS/SS) of a mass of the hard segment (HS) to a mass of the soft segment (SS) of the polyamide-based thermoplastic elastomer is from 55/45 to 90/10.

3. The tire according to claim 1 or 2, wherein the hard segment comprises a polyamide synthesized by using a monomer represented by the following Formula (1) or the following Formula (2):
**Formula (1)** H₂N-R¹-COOH,
wherein R¹ represents a hydrocarbon molecular chain having 2 to 20 carbon atoms, or an alkylene group having 2 to 20 carbon atoms, 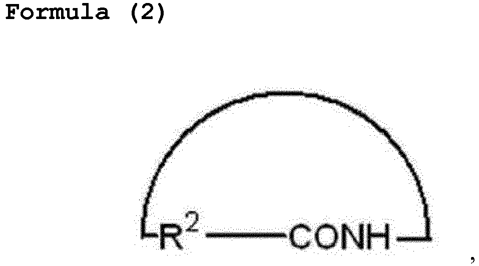 wherein R² represents a hydrocarbon molecular chain having 3 to 20 carbon atoms, or an alkylene group having 3 to 20 carbon atoms.

4. The tire according to any one of claims 1 to 3, wherein the soft segment is a copolymer comprising a constituent unit derived from tetramethylene ether glycol.

5. The tire according to any one of claims 1 to 4, wherein the hard segment comprises a constituent unit represented by -[CO-(CH₂)₁₁-NH]-.

6. The tire according to any one of claims 1 to 5, wherein the soft segment is formed of a polypropyleneglycol/polytetramethylene ether glycol/polypropyleneglycol terpolymer.

7. The tire according to any one of claims 1 to 6, wherein a content of the hard segment in a molecule of the polyamide-based thermoplastic elastomer is 50 mass% or more.

## Patentansprüche

1. Reifen umfassend: einen ringförmigen Reifenrahmen, der aus einem Harzmaterial gebildet ist, wobei das Harzmaterial ein thermoplastisches Elastomer auf der Basis von Polyamid umfasst, das ein Weichsegment und ein Hartsegment in einem Molekül davon umfasst, wobei das Hartsegment eine Kristallinität von 14 % bis 26 % aufweist, wobei das Weichsegment aus einem Dreiblock-Polyetherdiamin vom ABA-Typ gebildet ist.

2. Reifen nach Anspruch 1, wobei ein Verhältnis (HS/SS) einer Masse des Hartsegments (HS) zu einer Masse des Weichsegments (SS) des thermoplastischen Elastomers auf der Basis von Polyamid 55/45 bis 90/10 beträgt.

3. Reifen nach Anspruch 1 oder 2, wobei das Hartsegment ein Polyamid umfasst, das unter Anwendung eines Monomers synthetisiert worden ist, das durch die folgende Formel (1) oder die folgende Formel (2) dargestellt ist:
Formel (1) H₂N-R¹-COOH
wobei R¹ eine Kohlenwasserstoffmolekülkette, die 2 bis 20 Kohlenstoffatome aufweist, oder eine Alkylengruppe, die 2 bis 20 Kohlenstoffatome aufweist, darstellt 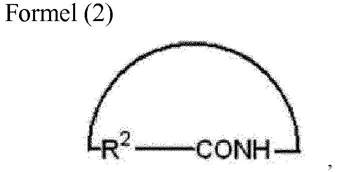 wobei R² eine Kohlenwasserstoffmolekülkette, die 3 bis 20 Kohlenstoffatome aufweist, oder eine Alkylengruppe, die 3 bis 20 Kohlenstoffatome aufweist, darstellt.

4. Reifen nach einem der Ansprüche 1 bis 3, wobei das Weichsegment ein Copolymer ist, das eine konstituierende Einheit umfasst, die von Tetramethylenetherglycol abgeleitet ist.

5. Reifen nach einem der Ansprüche 1 bis 4, wobei das Hartsegment eine konstituierende Einheit umfasst, die durch -[CO-(CH₂)₁₁-NH]- dargestellt ist.

6. Reifen nach einem der Ansprüche 1 bis 5, wobei das Weichsegment aus einem Polypropylenglycol-Polytetramethylenetherglycol-Polypropylenglycol-Terpolymer gebildet ist.

7. Reifen nach einem der Ansprüche 1 bis 6, wobei der Gehalt des Hartsegments in einem Molekül des thermoplastischen Elastomers auf der Basis von Polyamid 50 Masse-% oder mehr beträgt.

## Revendications

1. Pneumatique comprenant: une carcasse de pneumatique circulaire formée d'un matériau de résine, le matériau de résine comprenant un élastomère thermoplastique à base de polyamide comprenant un segment souple et un segment dur dans une molécule de celui-ci, le segment dur ayant une cristallinité de 14 % à 26 %, le segment souple étant formé d'une polyéther diamine triséquencée de type ABA.

2. Pneumatique selon la revendication 1, un rapport (HS/SS) d'une masse du segment dur (HS) à une masse du segment souple (SS) de l'élastomère thermoplastique à base de polyamide étant de 55/45 à 90/10.

3. Pneumatique selon la revendication 1 ou 2, le segment dur comprenant un polyamide synthétisé en utilisant un monomère représenté par la formule suivante (1) ou la formule suivante (2):
Formule (1) H₂N-R¹-COOH,
dans laquelle R¹ représente une chaîne moléculaire hydrocarbonée ayant de 2 à 20 atomes de carbone, ou un groupe alcylène ayant de 2 à 20 atomes de carbone, 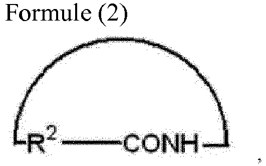 dans laquelle R² représente une chaîne moléculaire hydrocarbonée ayant de 3 à 20 atomes de carbone, ou un groupe alcylène ayant de 3 à 20 atomes de carbone.

4. Pneumatique selon l'une quelconque des revendications 1 à 3, le segment souple étant un copolymère comprenant un motif constitutif dérivé du tétraméthylène éther glycol.

5. Pneumatique selon l'une quelconque des revendications 1 à 4, le segment dur comprenant un motif constitutif représenté par -[CO-(CH₂)₁₁-NH]-.

6. Pneumatique selon l'une quelconque des revendications 1 à 5, le segment souple étant formé d'un terpolymère de poly(propylène glycol)/poly(tétraméthylène éther glycol)/poly(propylène glycol).

7. Pneumatique selon l'une quelconque des revendications 1 à 6, une teneur du segment dur dans la molécule de l'élastomère thermoplastique à base de polyamide étant de 50 % en masse ou plus.
